# EUROPÄISCHE PATENTANMELDUNG

(11) **EP 1 066 751 A2**
(43) Veröffentlichungstag der Anmeldung: **10.01.2001**
(21) Anmeldenummer: 99125905.2
(22) Anmeldetag: 22.12.1999
(51) Int. Cl.: A01G 13/02

(54) **Verfahren und Vorrichtung zum gezielten Ausbringen von Rindenmulch**

(30) Priorität: 12.05.1999 DE 29908475 U
(71) Anmelder: Schmidmeier, Thomas, D-93197 Ödenthal (DE)
(72) Erfinder: Schmidmeier, Thomas, D-93197 Ödenthal (DE)

## Beschreibung

Die Verwendung von sogenanntem Mulch zur Förderung der Bodengare sowie als Erosions-, Deflations- oder Verdunstungsschutz für Pflanzen, insbesondere Obstkulturen, im Gemüseanbau und im Landschaftsbau ist bekannt, wobei insbesondere auch eine Unterdrückung von Unkrautentwicklung angestrebt wird.

Dabei handelt es sich insbesondere um Gras-, Heu- oder Strohmaterial, Kartoffelkraut, Häckselstroh usw., das in sogenannten Mulchgeräten, das sind Anlagen mit rotierenden Sichel-, Scheiben- oder Schlegelmähwerken, auf Größen von wenigen Zentimetern zerkleinert oder über dem Boden geschnitten und breitgestreut abgelegt wird.
Derartige Geräte und Anlagen arbeiten auch mit Gebläse und sind bevorzugt front- oder heckseitig an einem Schlepper montiert oder ggf. auch seitlich als Auslegergerät angebracht.

Bevorzugt sind diese sogenannten Mulchgeräte, die -wie gesagt- als Sichel- oder Schlegelvorrichtung konstruiert sind, im Handbetrieb eingestzt.

Während es für die Ausbringung von Stroh-, Heu- usw. Mulchmaterial praktisch keinerlei Probleme gibt, erfordert das neuerdings als Mulchmaterial bevorzugte Rindengut eine genaue Beachtung von Korn- bzw. Materialgröße, Materialbeschaffenheit wie Festigkeit und Feuchtigkeitsgehalt, da die vom Baumstamm abgeschälte Rinde ein äußerst komplexes System beinhaltet, das je nach Alter, zeitlicher Lagerung und Kornbeschaffenheit nur äußerst gezielt als Mulchmaterial eingesetzt werden kann. Dies gilt insbesondere für solche Bodenbeseckungen, die bis zu 20 cm und mehr Höhe ausgebreitet werden, während andererseits der Rindenmulch erhebliche Vorteile gegenüber Gras-, Heu- Kartoffelmulch usw. aufweist.

In den vergangenen Jahren hat sich der Einsatz von Rinde als Mulchmaterial erheblich gesteigert, was insbesondere auf den erheblichen Schutz des Bodens vor Austrocknung zurückzuführen ist. Weiter führt das gegenüber Gras- bzw. Heumaterial spezifisch schwerere Rindenmaterial zu einem erheblich verbesserten Luft- bzw. Temperaturausgleich zwischen Nährboden und Pflanze, d.h. das Umgebungs- bzw. Bodenklima wird optimiert, ein Verkleben bzw. Zusammenbacken wie bei Heu-, Stroh- oder sonstigem Material verhindert usw., was insbesondere auf eine Regulierung des natürlichen Feuchtigkeitshasuhalts des Bodens zurückzuführen ist.

Darüberhinaus ist das -wie bereits gesagt- gegenüber Heu oder Stroh spezifisch schwerere und strukturmäßig erheblich komplexere Rindenmaterial weniger empfindlich gegen den Einfluß von Wind- und Luftströmungen, sodaß es am Ort auch dann verbleibt, wenn Heu- oder Strohhäcksel vom Wind ab- bzw. weggetragen wird.

Während das Ausbringen von leichtem Mulchmaterial wie Stroh usw. einfach zu handhaben ist, erfordert die gezielte und spezifische Ablegung von Rindenmulch erheblich mehr Körperaufwand, zum einen wegen des höheren spezifischen Gewichts, zum andern wegen des erforderlichen Mehbedarfs an Rindenmaterial, da das grobkörnige und ggf. plättchenförmige Material nur ab einer bestimmten Belagshöhe ein allen Erfordernissen genügendes Ergebnis liefert.

Dieserhalb musste das (Rinden)-Mulchmaterial bisher mit Kleingeräten wie Schaufeln usw. oder sogar vielfach von Hand vom Lagerplatz zur Pflanze wie Jungbäumen oder Anbauflächen für Reihenkulturen gebracht werden, wobei keinerlei Garantie gegeben war, daß eine gleichmäßige Belagshöhe bzw. -dichte erzielt wird, dies u.a. auch bedingt durch Entmischung des Mulchmaterials als Funktion der Partikelgröße und -herkunft, wobei schon leichte natürliche Abweichungen der Rinde, z.B. von Eichen, Buchen, Erlen usw. gegenüber Nadelhölzern, d.h. insgesamt der jeweiligen Baumart einschließlich des unterschiedlichen Strukturaufbaus, Feuchtigkeitsgehalts, Feinstkornanteil usw. eine unterschiedliche Behandlung erforderlich machten.

Dabei kann die Ausbreitung bzw. Ablage des Mulchmaterials z.B. von Hand oder mit Schaufeln, Rechen usw. nicht nur zu Verletzungen insbes. an Jungpflanzen führen, es kann auch die Anwendung von z.B. Gebläseanlagen zu einer nicht gezielten Ablage des Mulchmaterials an bzw. um die Pflanze herum führen, was insbesondere für Dämme bzw. bepflanzten Böschungen gilt.

Gegenstand der Erfindung ist dieserhalb ein Verfahren bzw. eine für dieses Verfahren entwickelte Vorrichtung, d.h. insgesamt ein System, das den Antransport des (Rinden-)Mulchmaterials bis hin zur gezielten Ausbringung und Ablage an die bzw. um die jeweilige Pflanze bzw. Reihenkultur voll automatisiert, den Landarbeiter vor Verletzungen schützr und das Arbeiten von Hand, etwa mit Schaufeln, Rechen usw. praktisch ausschaltet.

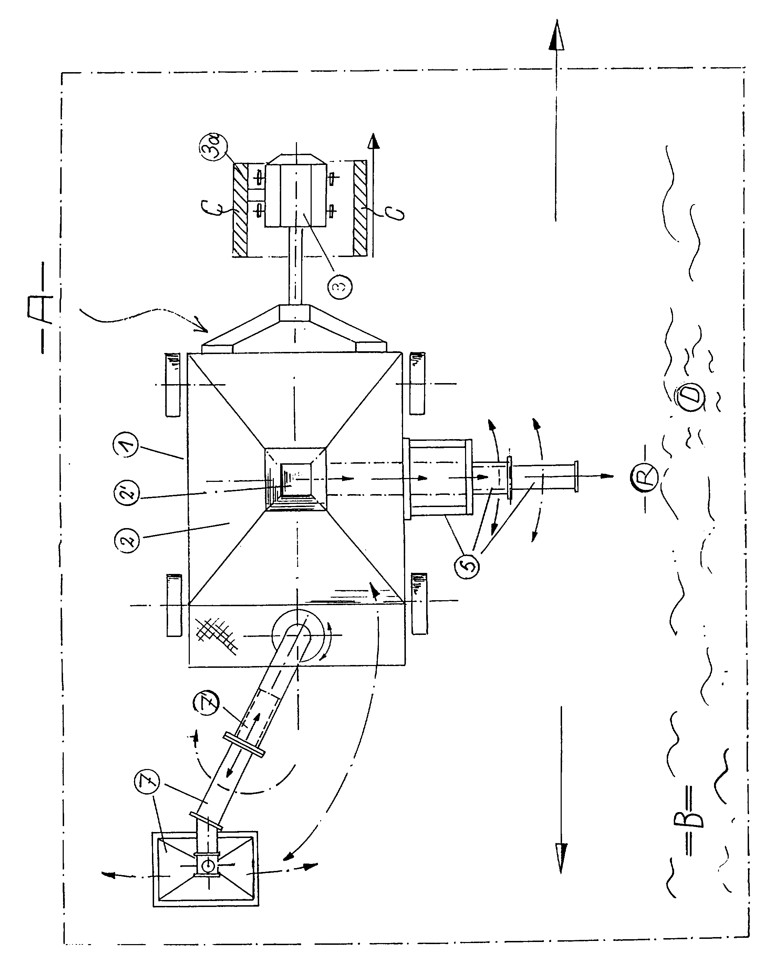

Erfindungsgemäß besteht eine zur Durchführung des Verfahrens entwickelte Anlage bzw. Vorrichtung aus einer Aneinanderreihung von Verfahrenschritten, die -ineinandergreifend- lediglich eine Überwachung des Ablaufs zur Folge hat, ohne daß ein Eingreifen des Bedienungspersonals erforderlich wird. Die Anlage bzw. Vorrichtung zur Durchführung eines Verfahrens zur gezielten und das Arbeitspersonal schonenden bzw. nicht belästigenden Ausbringung und Ablage von Rindenmulch wird nachfolgend anhand der einzigen Figur dargestellt bzw. erläutert, wobei auch das beanspruchte Verfahren definiert wird.

Die Anlage bzw. Vorrichtung besteht zunächst aus einem handelsüblichen bzw. in der Landwirtschaft allgemein gebräuchlichen Lade- oder Mischwagen (1) mit Laderaum (2), der bevorzugt nach unten konisch verläuft und in einen Auslaß (2') einmündet. Dieser Ladewagen ist bevorzugt als Anhänger an ein gebräuchliches Fahrwerk (3), etwa an einen Traktor oder ein anderes gebräuchliches Ziehaggregat wie ein Kleinlastwagen gekoppelt (vgl. hierzu die einzige Figur). Natürlich kann der Ladewagen (1) auch einen eigenen Antrieb aufweisen, der zweckmäßigerweise an bzw. auf dem vorderen Bereich des Gesamtsystems angeordnet ist.
Der nach unten konisch verlaufende Laderaum (2) mit Auslaß (2') führt zu einem Förderband (5), das beliebig ausziehbar bzw. verlängerbar ist -dies auch evtl. als Folge von zwei oder mehreren hintereinander geschalteten Förderbändern- und das auch gegenüber der Horizontalen nach oben oder unten richtungsmäßig einstellbar ist.

Hierdurch bedingt, können praktisch alle Bereiche in der Nähe des Lade- bzw. Mischwagens (1) -auch über Böschungen hinwegerreicht werden, sodaß örtlich eine gezielte, durch die variable Öffnungsbreite des Auslaß (2') auch mengenmäßig einstellbare Ablage des Rindenmulchguts erfolgen kann.
Am hinteren Ende des Mischwagens (1) ist ein Ladekran (7) mit Schaufel angebracht, der nach allen Seiten schwenkbar und gleichzeitig höhen- und tiefen-verstellbar ist (7'). Auch dieser Ladekran ist durch geeignete, bekannte Elemente längenveränderlich einstellbar.

Am Ort der Beladung des Mischwagens (1) übernimmt der Kran (7) das Rinden-Mulchgut und wirft es über dem Mischwagen (1) in diesen hinein ab. Das Fahrzeug (3) fährt mit dem beladenen Mischwagen (1) zum Ablegeort für das Mulchgut, wo nach Einstellung des in Länge und Höhe variablen Förderbands (5) die gezielte Ablage bei (R) erfolgt. Dabei kann die gesamte Anlage einschließlich Mischwagen (1), Kran (7), Förderband bzw. Förderbänder (5) d.h. der bezeichnete Anlagenaufbau (A) entsprechend der Größe der Ablegefläche (B) an dieser Fläche entlang gefahren werden, sodaß manuelle Arbeit, abgesehen von der Schaltung der verschiedenen Arbeitselemente des Fahrzeugs (3) vollkommen entfällt.

Gesteuert wird die Vorrichtung bzw. deren Handhabung von einem teil- oder voll-automatischen Schaltsystem (C), das in oder an der Fahrerkabine (3) -vgl. (3a)- angebracht ist. Von hier kann der Fahrer des Systems den Gesamtvorgang überblicken, d.h. es wird ihm die Menge des im Mischwagen (1) vorhandenen oder noch vorhandenen Mulchmaterials angezeigt; gleichzeitig wird ihm der Abstand des Mischwagens (1) und damit die Auszugslänge und Höhe des Förderbands (5) bestimmt, verbunden mit der exakten Abwurfposition (D). Schlieslich kann von der Fahrerkabine (3) aus beim erneuten Beladen des Mischwagens (1) die Bewegung des Ladekrans (7) eingestellt bzw. variiert werden.

Durch vorstehende Spezifikation der Gesamtanlage wird eine praktisch vollkontinuierliche, gezielte und saubere Ausbringung von Rindenmulch erreicht, die unabhängig von der Beschaffenheit der Oberfläche des Bodens -Flachland, Böchungen, Dämme usw.- sowie Einzel- oder Mehrreienkulturen usw. beliebig eingesetzt werden kann.

Dabei sind alle Prozess-stufen von einer Person im geschützten Fahrzeug (3) mit Schalt- und Anzeigetafel (3') praktisch kontinuierlich durchführbar.
Darüberhinaus kann die Gesamteinheit aus Ladekran (7), Misch- bzu. Ladewagen (1) mit Förderband (5) und Zugmaschine (3) zu jedem gewünschten Ort gefahren werden, ohne daß bezüglich Auf- bzw. Abladung des Mulchmaterials zusätzliche Aggregate oder Handlungen erforderlich sind. Ausserdem kann die Menge des abzulegenden Mulchmaterials über eine -nicht dargestellte- Waage am Ausgang bzw. Auslaß (2') des Misch- bzw. Ladewagens (1) oder auch über die Öffnungsgröße des Bodenauslaß (2')eingestellt werden.

## Patentansprüche

1. Anlage zur kontinuierlichen Aufnahme und darauffolgender gezielten Ablage von Rindenmulch im Gartenbau- und landuirtschaftlichem Betrieb,
dadurch gekennzeichnet, daß das Rindenmulchmaterial von einer einzigen, fahrbaren Anlage aufgenommen, zum Ausbringungsort gebracht und hier gemäß vorbestimmter Menge abgelegt bzw. ausgebreitet wird.

2. Anlage nach Anspruch 1,
gekennzeichnet durch einen gezogenen bzw. angetriebenen fahrbaren Misch- bzw. Ladewagen (1) mit Bodenauslaß bzu. Ausgang (2'), unter diesem Auslaß angeordneten, in Höhe, Länge und seitwärts verschieb- bzw. ausziehbaren Förderbändern (5) und im hinteren Bereich des Misch- bzu. Ladewagens (1) angeordneten Ladekran (7), der ebenfalls in Höhen- und Seiteneinstellung (7') variabel ist und eine zur Aufnahme des Rindenmulchguts geeignete Schaufel trägt, wobei die gesamte Anlage entweder selbst fahrbar oder insbesondere von einem separaten Fahrzeug (3) bewegt wird.

3. Anlage nach Anspruch 2,
dadurch gekennzeichnet, daß alle bewegliche Teilaggregate (5) und (7) von einem im Frontbereich der Anlage angeordneten Regelsystem (3a) gesteuert werden.

4. Anlage nach Ansprüchen 1 - 3,
dadurch gekennzeichnet, daß der Auslaßßbereich (2') im Misch- bzu. Ladewagen (1) mit einem Mengenregelgerät, insbesondere einer gesteuerten Wage, versehen ist.

5. Verfahren zur kontinuierlichen Aufnahme und darauffolgender gezielten Ablage von Rindenmulch an einem von der Aufnahme entfernten Ort,
dadurch gekennzeichnet, daß Aufnahme, Weitertransport und gezielte Ablage durch eine Anlage gemäß Ansprüchen 1 - 4 erfolgt.
